# EUROPÄISCHE PATENTSCHRIFT

(11) **EP 3 503 351 B1**
(45) Veröffentlichungstag und Bekanntmachung des Hinweises auf die Patenterteilung: **07.06.2023**
(21) Anmeldenummer: 18211052.8
(22) Anmeldetag: 07.12.2018
(51) Int. Cl.: H02K 1/27

(54) **PERMANENTMAGNETROTOR UND PERMANENTMAGNETGENERATOR UND VERFAHREN ZUR HERSTELLUNG EINES PERMANENTMAGNETROTORS**
PERMANENT MAGNET ROTOR AND PERMANENT MAGNET GENERATOR AND METHOD FOR PRODUCING A PERMANENT MAGNET ROTOR
ROTOR À AIMANTS PERMANENTS ET GÉNÉRATEUR À AIMANTS PERMANENTS ET PROCÉDÉ DE FABRICATION D'UN ROTOR À AIMANTS PERMANENTS

(30) Priorität: 21.12.2017 DE 102017011932
(43) Veröffentlichungstag der Anmeldung: 26.06.2019
(73) Patentinhaber: Rüdinger, Philipp, 75031 Eppingen (DE)
(72) Erfinder: Rüdinger, Philipp, 75031 Eppingen (DE)
(74) Vertreter: Clemens, Gerhard

(56) Entgegenhaltungen:
- DE-A1- 19 514 765
- DE-A1-102009 001 174
- JP-A- H0 678 481
- JP-A- H08 223 835
- US-B1- 9 130 437
- Anonymus: "Weichmagnetische Werkstoffe und Halbzeuge", , 1. Januar 2002 (2002-01-01), Seiten 1-32, XP055573676, Gefunden im Internet: URL:https://www.vacuumschmelze.de/fileadmi n/Medienbiliothek_2010/Downloads/HT/PHT_00 1_Weichmag_Werkstoffe.pdf [gefunden am 2019-03-25]

## Beschreibung

### TECHNISCHES GEBIET

Die vorliegende Erfindung betrifft einen Permanentmagnetrotor - nachfolgend auch Rotor genannt - mit einem zentralen, kreiszylindrischen Rotorblechkörper oder Rotorblechpaket oder Rotorblock, zumindest zwei auf der Außenoberfläche des Rotorblechkörpers zumindest bereichsweise oberflächig angeordneten Magnetpole mit bereichsweise umgekehrter magnetischer Polung und einer die Magnetpole außenseitig umgebenden Umhüllung, wobei die Umhüllung als magnetisch leitfähiges Magnethalteblech ausgebildet ist, in zumindest einem magnetfreien Umfangsbereich des Rotorblechkörpers das Magnethalteblech mit dem Rotorblechkörper verbunden ist.

Die vorliegende Erfindung betrifft weiterhin einen Permanentmagnetgenerator mit einer Statorvorrichtung, einem Permanentmagnetrotor und eine an den Permanentmagnetrotor gekoppelte Welleneinrichtung,

Die vorliegende Erfindung betrifft darüber hinaus ein Verfahren zur Herstellung eines Permanentmagnetrotors.

### STAND DER TECHNIK

Bei Permanentmagnetgeneratoren sind grundsätzlich zwei verschiedene Rotorgeometrien bekannt.

Eine erste Rotorgeometrie wird in der Fachsprache "eingegrabene Magnete", "eingebettete Magnete", "vergrabene" oder "eingeschobene Magnete" genannt. Bei dieser Geometrie sind im Rotor Blechpaketaussparungen beziehungsweise Taschen vorhanden, in die Magnete eingeschoben werden. Derartige Permanentmagnetrotoren werden in vielen Varianten und hohen Stückzahlen für Elektromotoren und Generatoren mit Inverter oder Wechselrichter eingesetzt.

Eine zweite Rotorgeometrie wird in der Fachsprache "Oberflächen montierte Magnete" genannt. Bei dieser zweiten Geometrie sind die Magnete auf der Blechpaketoberfläche des Rotors montiert. Dabei wird zwischen einem Innenpolläufer oder Außenpolläufer unterschieden.

Die Geometrie der "Oberflächen montierten Magnete" als Innenpolläufer wird häufig bei hochpoligen Motoren und Generatoren verwendet, die mit relativ geringen Drehzahlen rotieren, so dass keine hohen Zentrifugalkräfte auf die Magnete aufgrund der Rotation entstehen, wie zum Beispiel im Bereich der Wasserkraft oder Windkraft. Bei kleinen Stromerzeugern, die über üblicherweise eine Motordrehzahl von 3000 U/min aufweisen und mit einem hochpoligen Generator mit zum Beispiel 8 Polen muss die elektrische Energie mit einem Umrichter auf die jeweilige meistens niedrigere Verbraucherfrequenz und Verbraucherspannung umgerichtet werden. Bei derartigen Permanentrotorgeometrien ist es bekannt, die auf die Magnete einwirkenden hohen Fliehkräften durch eine Glasfaser-, Aramidfaser- oder Kohlefaserbandagierung, zum Beispiel in Form einer Umhüllung gehalten werden. Eine weitere bekannte angewendete Technik ist eine Verwendung einer Metallhülse aus einem nicht magnetischen Material wie zum Beispiel Edelstahl, Aluminium oder Messing.

Oberflächen montierte Magnet-Geometrien sind deutlich anspruchsvoller zu montieren, im Vergleich zu der oben beschriebenen ersten Rotorgeometrie "eingebettete Magnete" und haben daher gegenüber "eingebetteten Magneten" eine längere Montagezeit. Weiterhin werden bei einer segmentierten gleichpoligen Magnetmontage aufwendige Vorrichtungen benötigt, um die Magnete prozesssicherer montieren zu können.

Ein Nachteil dieser Geometrie ist, dass sich neben dem mechanischen Grundluftspalt für eine erforderliche freie Rotordrehung im Stator, sich ein weiterer "magnetischer Luftspalt" aufgrund der nicht magnetischen Bandagierung oder der nicht magnetischen Metallhülse ergibt. Somit muss der magnetische Verlust im Luftspalt über eine höhere Magnetisierungsstärke oder ein höheres Magnetvolumen ausgeglichen werden.

Ein weiterer Nachteil des durch diese Technik bedingten größeren magnetischen Luftspalts bei einer Generatoranwendung ist, dass sich der Generator "spannungsweich" verhält, das heißt einen hohen Spannungseinbruch mit zunehmender Last aufweist. Durch den Spannungseinbruch des Generators wird die maximale Leistung nach geltenden Normen für Spannungstoleranzen bestimmt. Weist der Generator einen hohen Spannungseinbruch, insbesondere bei induktiven Lasten mit niedrigem Leistungsfaktor, auf, dann reduziert sich somit auch die Leistung des Generators, um die Grenzwerte der Spannungstoleranz nach Norm nicht zu überschreiten. Eine Variante ist es, das relative Eisen- und Magnetvolumen zu erhöhen, um den Generator spannungshärter auszuführen, dies hat jedoch wiederum den Nachteil, dass das Gewicht des Generators sowie die Materialkosten und insbesondere die Magnetkosten deutlich ansteigen. Daher werden derzeit Permanentmagnetgeneratorensysteme mit nachgeschalteten Inverter oder Wechselrichter ausgestattet, die den Spannungseinbruch ausregeln.

Bei der Verwendung elektrisch leitender Hülsenwerkstoffe ist es nachteilig, dass in dem Werkstoff Wirbelströme durch das Statormagnetfeld induziert werden und sich somit die Hülse oder Hülsen erwärmen. Durch die Wärmeenergie der Hülsen werden daher auch die Magnete erwärmt, wodurch die Feldstärke der Magnete in Abhängigkeit der Temperatur reduziert wird. Steigt die Temperatur über die maximale Magnettemperatur, dann wird der Magnet irreversibel teil- oder entmagnetisiert, wodurch die Generatorspannung und Generatorleistung nicht mehr erreicht wird.

Ein weiterer Nachteil bei der bekannten Oberflächen montierten RotorGeometrie ist, dass die Magnete durch den Statorstrom einer hohen Entmagnetisierung (Koerzitivfeldstärke) ausgesetzt sind. Somit können die Magnete durch zu hohe Statorströme oder Stromspitzen, wie beispielsweise einer magnetischen Auslösung eines Sicherungsautomaten oder einem hohen Einschaltstrom, von einem Verbraucher irreversibel teil- oder entmagnetisiert werden. Dadurch erfordert diese Geometrie eine sehr genaue Berechnung und Auslegung der maximalen Koerzitivfeldstärke und des maximal auftretenden Stroms, abgestimmt auf den jeweiligen Einzelfall. Um den Generator vor zu hohen Strömen zu schützen, wird daher bei derzeitigen Permanentmagnetgeneratorsystemen ein Inverter oder Wechselrichter nachgeschaltet, der den maximalen Generatorstrom begrenzt.

Bei den bekannten Generatorsystemen mit Permanentmagnetrotoren wird aufgrund der spannungsweichen Charakteristik sowie des maximal zulässigen Stromes des Generators, die Spannung über einen Umrichter ausgeregelt. Der Umrichter kann aufgrund eines eingesetzten Kondensatorzwischenkreises die erforderlichen Stromspitzen der Verbraucher aufbringen und schützt somit den Permanentmagnetgenerator vor zu hohen Strömen.

Aus der DE 200 22 289 U1 ist eine Stromerzeugereinheit aus Generator- und Hubkolbenverbrennungsmotor als Antrieb bekannt, mit der im Rotor des Generators zu dessen Erregung im Bereich der Pole angeordnete Dauermagnete und einer Ankerwicklung im Stator vorhanden ist. Dabei sind in den Polbereichen des Rotors in axialer Richtung wenigstens einseitig offene Aufnahmetaschen vorhanden, welche an der zylindrischen Umfangswandung an den mit dem Stator gebildeten Luftspalt angrenzen. Die Dauermagnete der Polbereiche werden jeweils durch eine Mehrzahl von Magnetelementen gebildet, die in Umfangsrichtung innerhalb der Aufnahmetaschen nebeneinander angeordnet sind.

Die JP H06 78481 A offenbart einen Permanentmagnetrotor mit den Merkmalen des Oberbegriffs des Anspruchs 1. Die die Magnetpole umgebende Umhüllung ist als magnetisch leitfähiges Magnethalteblech ausgebildet und zumindest in einem magnetfreien Umfangsbereich des Rotorblechkörpers mit dem Rotorblechkörper verbunden, nämlich unter Einsatz von Druckstäben, die das Magnethalteblech durch plastische Verformungen unter Vorspannung setzen und in Ankerringkörpern verankert sind.

Die US 9 130 437 B1 offenbart ein Permanentmagnetrotor, der im magnetfreien Bereich des Rotors eine Abflachung zur Verbesserung der axialen Kühlung eines Permanentmagnetrotors mit Bandage beschreibt.

Die DE 195 14 765 A1 offenbart einen dauermagneterregten Läufer für eine elektrische Maschine, bei dem am Außenumfang eines Läuferblechpakets Dauermagnete angeordnet und durch eine um die Dauermagnete gelegte Bandage gehalten sind. Die Bandage ist hierbei als geschlossener Ring ausgebildet und weist mindestens eine in Umfangsrichtung elastische Dehnstelle auf, wobei der Innendurchmesser des Ringes kleiner ist als der Außendurchmesser des mit dem Dauermagneten bestückten Läufer.

### DARSTELLUNG DER ERFINDUNG

Der vorliegenden Erfindung liegt die Aufgabe beziehungsweise das technische Problem zugrunde einen Permanentmagnetrotor und einen Permanentmagnetgenerator anzugeben, der eine einfache und dauerhaft zuverlässige Sicherung und Fixierung der Magnete ermöglicht, einen Schutz und eine Abschirmung der Magnete vor einer Entmagnetisierung bei einem Kurzschluss durch das Statormagnetfeld zuverlässig verhindert, zudem einen geringen magnetischen Luftspalt zwischen Rotor und Stator ermöglicht und außerdem eine wirtschaftliche Montage gewährleistet. Des Weiteren liegt der vorliegenden Erfindung die Aufgabe zugrunde, ein Verfahren zur Herstellung eines Permanentmagnetrotors anzugeben, das reduzierte Montagezeiten ermöglicht bei gleichzeitiger Gewährleistung einer hohen Prozessicherheit.

Der erfindungsgemäße Permanentmagnetrotor ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche 2 bis 10.

Der erfindungsgemäße Permanentmagnetgenerator ist durch die Merkmale des Anspruchs 11 gegeben. In Anspruch 12 wird der Permanentmagnetgenerator vorteilhaft weitergebildet.

Das erfindungsgemäße Verfahren zur Herstellung eines Permanentmagnetrotors ist durch die Merkmale des Anspruchs 13 gegeben.

Vorteilhafte Ausgestaltungen und Weiterbildungen des Verfahrens sind durch die von dem unabhängigen Verfahrensanspruch 13 direkt oder indirekt abhängigen Ansprüche 14 und 15 gegeben.

Der erfindungsgemäße Permanentmagnetrotor zeichnet sich demgemäß dadurch aus, dass das Magnethalteblech im magnetfreien Umfangsbereich des Rotorblechkörpers mehrere, in Querrichtung beabstandete, insbesondere parallel beabstandete, in Umfangsrichtung verlaufende Magnethalteblechausnehmungen mit Magnethalteblechstegen aufweist, der Rotorblechkörper im Umfangsbereich der Magnethalteblechausnehmungen und Magnethalteblechstegen eine nach außen offene Rotorblechkörperaussparung aufweist.

Die Magnethalteblechausnehmung gewährleistet eine einfache Montage.

Durch das Vorsehen eines magnetisch leitfähigen Magnethalteblechs als Umhüllung ist ein Generator mit hoher Kurzschlussfestigkeit umsetzbar. Es findet praktisch keine Entmagnetisierung der Magnetpole statt, da das Magnethalteblech im Kurzschluss gesättigt wird und die Rotormagnete vor zu hohen magnetischen Feldstärken des Statorstroms abschirmt.

Eine bevorzugte konstruktive Ausgestaltung, zeichnet sich dadurch aus, dass das Magnethalteblech umlaufend über alle Magnetpole vorhanden ist oder separate Magnethaltebleche über jedem Magnetpol vorhanden sind.

Die magnetisch leitfähige Legierung des Magnethalteblechs reduziert aufgrund des hohen Siliziumanteils die Wirbelströme im Magnethalteblech. Der Siliziumanteil senkt die elektrische Leitfähigkeit und reduziert somit deutlich die Wirbelströme im Magnethalteblech. Aufgrund der geringen Wirbelstrominduktion erwärmt sich das Magnethalteblech geringer und damit entsteht auch in den Magneten keine hohe Temperatur oder gar eine zu hohe Magnettemperatur, die die Magnete irreversibel teil- oder entmagnetisiert. Bedingt durch die geringe Magnettemperatur kann eine günstigere Magnetlegierung verwendet werden, die eine geringere maximale Magnettemperatur aufweist.

Eine besonders bevorzugte Ausgestaltung des erfindungsgemäßen Permanentmagnetrotors zeichnet sich dadurch aus, dass das Magnethalteblech als Elektroblech/-legierung mit hohem Siliziumanteil ausgebildet ist. Durch die Verwendung eines Elektroblechs mit hohem Siliziumanteil werden die Wirbelströme im Blech gering gehalten, wodurch sich die Magnete nicht stark erwärmen, was insgesamt eine geringe Magnettemperatur zur Folge hat, was große Vorteile bietet, wie ein sehr geringer temperaturabhängiger Feldstärkeverlust des Magneten und damit ein sehr geringer Spannungseinbruch durch die Magnettemperaturdifferenzen zwischen "kalten" und "betriebswarmen" Generator.

Der Magnetpol kann in einer ersten Ausführungsvariante als Bogenmagnet oder als aus einzelnen in Umfangsrichtung nebeneinander angeordneten Magnetsegementen bestehender Magnetpol ausgebildet sein.

So können durch das Magnethalteblech des Permanentmagnetrotors segmentierte gleichpolige Rotorgeometrien einfacher und effizienter montiert werden. Aufgrund der hohen Steifigkeit des Magnethalteblechs können die Magnete in einer bestimmten Reihenfolge eingeschoben und fixiert werden. Somit entfallen bisher benötigte aufwendige Vorrichtungen, die bei einem gleichpoligen Montieren von Magneten erforderlich sind.

Eine besonders bevorzugte Ausgestaltung des erfindungsgemäßen Permanentmagnetrotors zeichnet sich dadurch aus, dass das Magnethalteblech im montierten, am Rotorblechpaket befestigten Zustand unter Vorspannung steht.

Durch die Aufbringung einer Vorspannung auf das Magnethalteblech werden die auf der Oberfläche des Rotorblechkörpers angeordneten Magnete zuverlässig gesichert, ohne dass geringfügige Luftspalte zwischen den Magneten und dem Magnethalteblech entstehen. Dadurch wird der Widerstand des Magnetkreises reduziert, wodurch eine höhere Generatoreffizienz erreicht wird. Die Magnete werden durch die Vorspannung und hohe Streckgrenze des Magnethalteblechs, das wie bereits erwähnt als magnetisch leitfähige Stahllegierung mit hohem Siliziumanteil ausgebildet ist, besser vor Fliehkräften geschützt als bei der bekannten Glasfaser- oder Kohlefaserbandagierung. Dadurch ergibt sich eine hohe Drehzahlfestigkeit.

Aufgrund der erfindungsgemäß vorgesehenen hohen Vorspannung des Magnethalteblechs weist der Permanentmagnetrotor eine deutlich verbesserte Drehzahlfestigkeit und Robustheit auf. Das Magnethalteblech, das bevorzugt als Stanzbiegeteil ausgebildet ist, gewährleistet zudem eine runde gleichmäßige Oberfläche des Bleches. Dadurch weist der mechanische und magnetische Luftspalt zum Stator einen gleichmäßigen Spalt auf, wodurch eine gleichmäßige magnetische Luftspaltdurchflutung erreicht wird. Diese gleichmäßige magnetische Luftspaltdurchflutung führt zu einem optimalen Sinusverlauf mit sehr geringen Oberwellenanteilen und einem geringen Rastmoment.

Bedingt durch die hohe Festigkeit und der homogenen Oberfläche des Magnethalteblechs kann der mechanische Luftspalt im Vergleich zu einer eingebetteten Magnetgeometrie oder einer Oberflächen montierten Magnetgeometrie mit beispielsweise einer Glasfaserbandagierung verringert werden. Ein weiterer Vorteil durch das magnetisch leitfähige Magnethalteblechs ist darin zu sehen, dass der magnetische Luftspalt verringert ist und dadurch die Feldstärke des Magneten oder das teure Magnetvolumen reduziert werden kann. Aufgrund des geringen magnetischen Luftspaltes verhält sich der Generator spannungshart und kann ohne einen Umrichter, Inverter oder Wechselrichter direkt mit den jeweiligen elektrischen Verbrauchern, insbesondere induktiven Verbrauchern, angeschlossen werden, ohne dass der Spannungseinbruch die Grenzwerte der Norm überschreitet.

Die Dicke des Magnethalteblechs liegt bevorzugt im Bereich zwischen 0,3 bis 1,5 mm, insbesondere bei circa 0,35 mm. Auch eine andere Dicke je nach Anforderung und Geometrie sind möglich.

Um eine möglichst geringe Feldverschiebung des statischen Rotormagnetfeldes durch das Magnetfeld des Stators zu erhalten, wird das Magnethalteblech sehr dünn ausgeführt, wodurch im Eisen des Magnethaltebleches das statische Magnetfeld nur geringfügig durch das äußere Statormagnetfeld im Lastbetrieb verschoben wird. Insbesondere bei induktiven Lasten wird das statische Magnetfeld nur gering verschoben und zeichnet einen Generator besonders für hohe Einschaltströme von induktiven und schwer anlaufenden Verbrauchern aus. Bedingt durch die geringe Feldverschiebung kann eine dreiphasige Generatorwicklung des Permanentmagnetgenerators einphasig sehr hoch belastet werden, ohne dass es zu einer gefährlichen Spannungserhöhung der unbelasteten Phasen kommt.

Um eine einfache Montage zu gewährleisten, zeichnet sich der erfindungsgemäße Permanentmagnetrotor dadurch aus, dass mehrere, in Querrichtung beabstandete, insbesondere parallel beabstandete, in Umfangsrichtung verlaufende Magnethalteblechausnehmungen mit Magnethalteblechstegen vorhanden sind.

Die Rotorblechkörperaussparung ist auch im Bereich der Magnethalteblechstege vorhanden.

Die Magnethalteblechausnehmungen bieten folgende Vorteile:
Zum einen wird durch die Ausnehmungen eine Eingriffsmöglichkeit zum Vorspannen des Magnethalteblechs auf die Magnete und damit der mechanischen Fixierung der Magnete ermöglicht. Ein weiterer positiver Effekt der Magnethalteblechausnehmungen besteht darin, dass durch die Ausnehmungen die resultierende Querschnittsfläche des Magnethalteblechs im Aussparungsbereich auf die relativ dünnen Magnethalteblechstege reduziert werden kann. Somit werden die Magnethalteblechstege bei geringen magnetischen Feldstärken gesättigt und reduzieren somit die Verlustgröße des magnetischen Kurzschlusses des Magneten über das Eisen des Magnethalteblechs auf die Gegenpolseite des Magneten innerhalb des Permanentmagnetrotors.

Eine besonders bevorzugte Ausgestaltung, die eine einfache Montage ermöglicht, zeichnet sich dadurch aus, dass der Rotorblechkörper im magnetfreien Bereich eine Abflachung aufweist.

Eine konstruktiv besonders einfache Ausgestaltung, die einen dauerhaft zuverlässigen funktionalen und einfach zu montierenden Permanentmagnetrotor gewährleistet, zeichnet sich dadurch aus, dass mehrere in Umfangsrichtung des Rotorblechkörpers versetzt angeordnete magnetfreie Bereiche vorhanden sind, wobei in Umfangsrichtung zwischen den magnetfreien Bereichen jeweils magnetisch getrennte Magnetpole mit umgekehrter magnetischer Polung vorhanden sind und die Magnetpole von einem umlaufenden oder von jeweils einem separaten Magnethalteblech umhüllt sind/ ist.

Eine in der Praxis bewährte Weiterbildung zeichnet sich dadurch aus, dass die Magnetpole / magnetfreien Bereiche in Umfangsrichtung in einem Winkel von 180°, 90°, 60°, 45°, 36°, 30°, 25,7°, 22,5°, 20° oder 18° angeordnet sind.

Eine bevorzugte Weiterbildung zeichnet sich dadurch aus, dass der Magnetpol als Bogenmagnet oder als aus einzelnen in Umfangsrichtung nebeneinander angeordneten Magnetsegmenten bestehender Magnetpol ausgebildet ist. Bevorzugt ist die Ausbildung der Verbindung des/der Magnethaltebleche mit dem Rotorblechkörper als Schweiß-, Klammer-, Klebe-, Niet- oder Schraubverbindung ausgebildet.

Durch das Vorsehen eines magnetisch leitenden Magnethalteblechs werden die Magnete im normalen Generatorbetrieb mit einer geringen Koerzitivfeldstärke als bei einer nicht magnetischen Bandagierung belastet. Dadurch kann der Arbeitspunkt des Magneten deutlich effizienter ausgelegt werden, wodurch der Generator eine höhere Leistungsdichte erreicht.

In einem Kurzschlussfall oder einer magnetischen Auslösung eines Sicherungsautomaten, wird der Generator je nach Sicherungscharakteristik mit bis zu 10-fachem Nennstrom belastet. In diesen Zustand kann ein betriebswarmer Permanentmagnetgenerator mit einer bekannten Glasfaserbandagierung durch den hohen Statorstrom und der dadurch resultierenden Koerzitivfeldstärke, insbesondere an den Magnetkanten, teil- oder entmagnetisiert werden.

Bei dem erfindungsgemäßen Permanentmagnetrotor mit dem magnetisch leitfähigen Magnethalteblech steigt bei einem höher werdenden Statorstrom durch die Ankerrückwirkung die Flussdichte im Magnethalteblech an. Aufgrund der höheren Flussdichte im Vergleich zum Betriebszustand kann über die Magnetisierungskennlinie des Magnethalteblechs bestimmt werden, wie hoch die relative Permeabilität (magnetische Leitfähigkeit) im Kurzschlussfall ist. Aufgrund einer Teil- oder Entmagnetisierung des oder der Magneten im Kurzschlussfall wird daher die Legierung und Halteblechdicke des Magnethalteblechs so gewählt, dass bei einem Kurzschluss die relative Permeabilität der Legierung in Richtung µr = 0 liegt. In diesem Zustand ist somit das Magnethalteblech voll gesättigt und schirmt die Magnete vor einer zu hohen Feldstärke durch das Statormagnetfeld ab.

Ein weiterer Vorteil des erfindungsgemäßen Permanentmagnetrotors mit dem magnetisch leitfähigen Magnethalteblech ergibt sich bezüglich der Rotormontage in den Stator. Beim Einsetzen des Rotors in den Stator wirken hohe magnetische Kräfte, die den Rotor in und an den Stator anziehen. Beim Montieren von großen Permanentmagnetgeneratoren muss somit über eine Vorrichtung der Rotor dosiert in den Stator eingesetzt werden. Der Nachteil ist dabei, dass der Rotor im Stator aufgrund der hohen Magnetkraft anliegt. Wird der Rotor dabei weiter eingesetzt, kann beispielsweise eine bekannte Glasfaserbandagierung durch das Statorblechpaket angeschnitten und beschädigt werden. Daher wird bei Rotoren mit einer Glasfaserbandagierung vorher in den Stator eine steife Kunststofffolie eingesetzt, die eine direkte Berührung mit dem Stator verhindert. Bedingt durch die Dicke der Kunststofffolie bei der Montage muss somit auch der konstruktive mechanische Luftspalt meistens vergrößert werden. Dies hat zur Folge, dass der magnetische Luftspalt zunimmt und die Generatorcharakteristik sich negativ in Richtung einer nicht gewünschten "Spannungsweichheit" verändert.

Mit dem erfindungsgemäßen Permanentmagnetrotor mit dem erfindungsgemäßen magnetisch leitfähigen Magnethalteblech ist eine homogene gleichmäßig glatte, stabile und unempfindliche Oberfläche vorhanden, so dass der Rotor ohne eine Kunststofffolie in den Stator eingesetzt werden. Damit kann der mechanische und magnetische Luftspalt des Generators klein ausgeführt werden, was sich positiv auf die Generatorcharakteristik im Bezug auf die Spannungshärte auswirkt.

Der erfindungsgemäße Permanentmagnetgenerator zeichnet sich dadurch aus, dass zumindest ein Permanentmagnetrotor der oben beschriebenen Art vorhanden/eingebaut ist.

Eine besonders bevorzugte Ausgestaltung des Permanentmagnetgenerators, der eine hohe Leistung und Energieeffizienz gewährleistet, zeichnet sich dadurch aus, dass mehrere in Umfangsrichtung der Welleneinrichtung versetzt und in Längsrichtung der Welleneinrichtung übereinander angeordnete Permanentmagnetrotoren vorhanden sind.

Das erfindungsgemäße Verfahren zur Herstellung eines Permanentmagnetrotors der oben beschriebenen Art mit folgenden bekannten Verfahrensschritten, nämlich das Befestigen von zumindest zwei Magnetpole mit umgekehrter magnetischer Polung zumindest bereichsweise auf der Außenoberfläche des Rotorblechkörpers mit anschließendem außenseitigen Umhüllen der Magnetpole mit einer Umhüllung, wobei als einzelne Umhüllung für jeden Magnetpol oder für alle Magnetpole gemeinsam ein magnetisch leitfähiges Magnethalteblech eingesetzt wird, das Magnethalteblech in Umfangsrichtung außenseitig um den Permanentmagnetrotor und die Magnetpole umgeformt/aufgewalzt wird und anschließend jeweils in den magnetfreien Bereichen des Permanentmagnetrotors befestigt wird, zeichnet sich dadurch aus, dass das Magnethalteblech eingesetzt wird, das im magnetfreien Umfangsbereich des Rotorblechkörpers mehrere, in Querrichtung beabstandete, insbesondere parallel beabstandete, in Umfangsrichtung verlaufende Magnethalteblechausnehmungen mit Magnethalteblechstegen aufweist, und ein Rotorblechkörper eingesetzt wird, der im Umfangsbereich der Magnethalteblechausnehmungen und Magnethalteblechstegen eine nach außen offene Rotorblechkörperaussparung aufweist.

Um eine sichere Fixierung des Magnetpols auf der Oberfläche des Rotorblechkörpers und einen minimalen Luftspalt zwischen Rotor und Stator zu gewährleisten, zeichnet sich eine vorteilhafte Ausgestaltung des Verfahrens dadurch aus, dass das Magnethalteblech vor der Befestigung an dem Rotorblechkörper unter Vorspannung gesetzt wird.

In einer bevorzugten vorteilhaften Ausgestaltung erfolgt die Befestigung des Magnethalteblechs an dem Rotorblechkörper im magnetfreien Bereich, beispielsweise durch Schweißung, Klebung, Klammerung, Nietung oder Schraubung.

Zusammenfassend ist festzustellen, dass durch den erfindungsgemäßen Permanentmagnetrotor ein kurzschlussfester Generator hergestellt, die Magnettemperatur während des Betriebs gering gehalten und eine spannungsharte Generatorcharakteristik bei gleichzeitig hoher Drehzahlfestigkeit gewährleistet werden kann. Zudem kann eine besonders wirtschaftliche Montage des Rotors in den Stator umgesetzt werden.

Weitere Vorteile und Merkmale der Erfindung sind den in den Ansprüchen ferner angegebenen Merkmalen sowie den nachstehenden Ausführungsbeispielen zu entnehmen.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: schematische Draufsicht auf ein erstes Ausführungsbeispiel eines Permanentmagnetrotors mit zwei gegenüberliegenden gegenpoligen Magnetpolen mit umfangsmäßig dazwischen angeordneten magnetfreien Bereichen, wobei die Magnetpole außenumfangsmäßig von einem Magnethalteblech gehalten werden, das magnetisch leitfähig ist und in den nicht magnetischen Bereichen mit dem Rotorblechkörper des Permanentmagnetrotors verbunden ist, wobei die Magnetpole aus in Umfangsrichtung nebeneinander angeordneten Magnetsegmenten bestehen,
- Fig. 2: schematische Perspektivdarstellung des Permanentmagnetrotors gemäß Fig. 1,
- Fig. 3: schematische Draufsicht auf ein zweites Ausführungsbeispiel eines Permanentmagnetrotors mit zwei gegenüberliegenden gegenpoligen Magnetpolen mit umfangsmäßig dazwischen angeordneten magnetfreien Bereichen, wobei die Magnetpole außenumfangsmäßig von einem Magnethalteblech gehalten werden, das magnetisch leitfähig ist und in den nicht magnetischen Bereichen mit dem Rotorblechkörper des Permanentmagnetrotors verbunden ist, wobei die Magnetpole jeweils als Bogenmagnet ausgebildet sind und
- Fig. 4: schematische Perspektivdarstellung des Permanentmagnetrotors gemäß Fig. 3.

### WEGE ZUM AUSFÜHREN DER ERFINDUNG

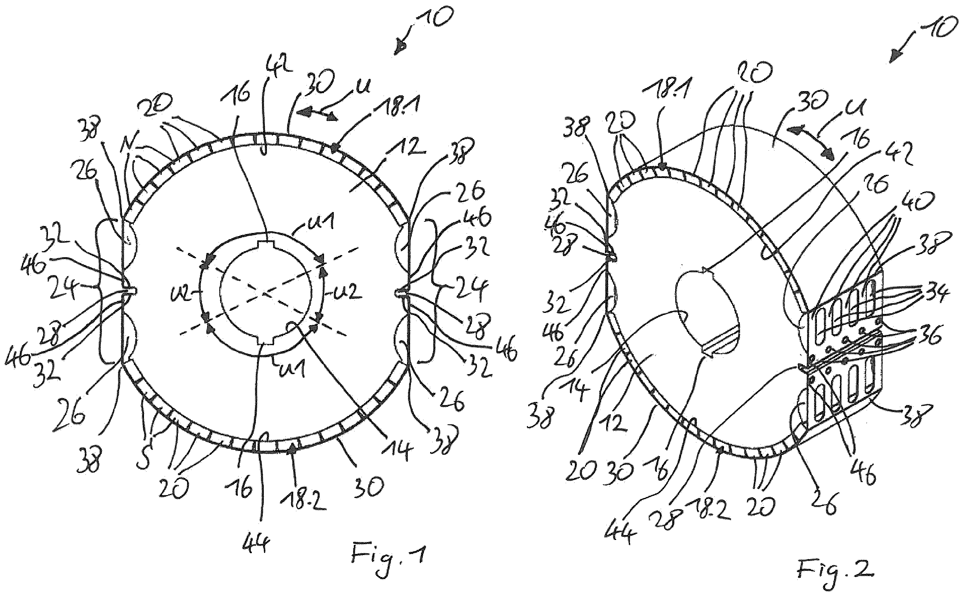

In Fig. 1 und 2 ist schematisch ein erstes Ausführungsbeispiel eines Permanentmagnetrotors 10 (nachfolgend Rotor 10 genannt) dargestellt, welcher als Innenpolläufer ausgebildet ist. Der Rotor 10 weist einen Rotorblechkörper 12, der als Rotorblechpaket oder Rotorblock ausgebildet ist, auf. Der Rotorblechkörper 12 weist eine rotationssymmetrische Geometrie auf und besitzt eine zentrale Wellenausnehmung 14, die zwei gegenüberliegende Passfedernute 16 aufweist, zum Anschluss einer in den Figuren nicht näher dargestellten Welleneinheit. Die Umfangsrichtung des Rotors 10 ist in den Figuren mit dem Doppelpfeil U dargestellt.

Der Rotorblechkörper 12 weist eine erste teilkreisförmige Außenkontur 42 und eine gegenüberliegend angeordnete zweite teilkreisförmige Außenkontur 44 auf, wobei der Umfangswinkel U1 der Außenkonturen 42, 44 im dargestellten Ausführungsbeispiel circa 120° (Altgrad) beträgt. Zwischen den beiden Außenkonturen 42, 44 sind außenseitig jeweils gegenüberliegende magnetfreie Bereiche 24 vorhanden, die gegenüber der teilkreisförmigen Außenkonturen 42, 44 eine Abflachung aufweisen. Auf der ersten teilkreisförmigen Außenkontur 42 ist ein erster Magnetpol 18.1 und auf der zweiten teilkreisförmigen Außenkontur 44 ist ein zweiter Magnetpol 18.2 angeordnet beziehungsweise aufgeklebt, der aus einer Vielzahl von in Umfangsrichtung U nebeneinander angeordneten Magnetsegmenten 20 besteht. Der Umfangswinkel U2 der beiden gegenüberliegenden abgeflachten magnetfreien Bereiche 24 beträgt im Ausführungsbeispiel jeweils circa 60° (Altgrad).

In beiden magnetfreien Bereichen 24 weist der Rotorblechkörper 12 im Anschluss an den Rand der ersten beziehungsweise zweiten teilkreisförmigen Außenkontur 42, 44 jeweils eine Rotorblechkörperaussparung 26 auf, die eine konkave Innenkontur besitzt. An die Rotorblechkörperaussparungen 26 schließt eine geradlinige Kontur 46 an, die von in Fig. 1 von oben beziehungsweise von unten kommend in eine Rotorblechkörpernut 28 mündet.

Im Bereich der ersten teilkreisförmigen Außenkontur 42 ist auf deren Oberfläche ein erster Magnetpol 18.1 angeordnet, der aus in Umfangsrichtung U nebeneinander angeordneten Magnetsegmenten 20 besteht. Im Bereich der zweiten teilkreisförmigen Außenkontur 44 ist ein zweiter Magnetpol 18.2 angeordnet, der ebenfalls aus in Umfangsrichtung U nebeneinander angeordneten Magnetsegmenten 20 besteht. Der erste Magnetpol 18.1 und der zweite Magnetpol 18.2 sind gegenpolig ausgebildet, das heißt bei dem ersten Magnetpol 18.1 ist der Nordpol N außenseitig vorhanden und bei dem zweiten Magnetpol 18.2 ist der magnetische Südpol S außenseitig vorhanden.

Beide Magnetpole 18.1, 18.2 bilden somit in Umfangsrichtung U mit dem Umfangswinkel U1 jeweils einen teilkreisförmigen magnetischen Bereich, der an seinen gegenüberliegenden Endbereichen jeweils in den abgeflachten magnetfreien Bereich 24 übergeht.

Sowohl der erste Magnetpol 18.1 als auch der zweite Magnetpol 18.2 ist jeweils von einem Magnethalteblech 30 außenseitig direkt anliegend umgeben, das erfindungsgemäß als magnetisch leitfähiges Blech ausgebildet ist. Die Dicke des Magnethalteblechs 30 beträgt im Ausführungsbeispiel 0,35 mm (Millimeter). Je nach Geometrie und Größe des Rotors 10 können auch größere oder kleinere Magnethalteblechdicken eingesetzt werden.

Jedes Magnethalteblech 30 weist somit im Umfangswinkelbereich U1 eine teilkreisförmige Kontur auf und geht im Übergang zum abgeflachten magnetfreien Bereich 24 in eine geradlinige Kontur über. Dabei ist im Übergangsbereich jeweils eine Magnethalteblechkante 38 vorhanden, die als Knick ausgebildet ist. Der geradlinige Bereich des Magnethalteblechs 30 verläuft außenseitig oberhalb der Rotorblechkörperaussparung 26 und liegt an der geradlinigen Kontur 46 des abgeflachten magnetischen Bereiches 24 an, wobei am Ende der geradlinigen Kontur 46 das Magnethalteblech 30 eine Magnethalteblechvorsprungeinheit 32 aufweist, die nach innen gerichtet in die Rotorblechkörpernut 28 eingreift.

Diese Geometrie des Magnethalteblechs 30 ist sowohl bei dem ersten Magnetpol 18.1 als auch bei dem zweiten Magnetpol 18.2 jeweils an beiden Endbereichen vorhanden.

Zusätzlich weist jedes Magnethalteblech 30 im abgeflachten magnetfreien Bereich 24 auf Höhe der Rotorblechkörperaussparung 26 jeweils mehrere in Umfangsrichtung U verlaufende, parallel in Querrichtung beabstandete Magnethalteblechausnehmungen 34 auf, so dass im Magnethalteblech 30 relativ dünne Magnethalteblechstege 40 gebildet werden.

Die Magnethaltebleche 30 werden unter Vorspannung auf der Außenoberfläche des Rotors 10 befestigt. Dabei können Vorspannmittel eingesetzt werden, die im Montagezustand mit den Magnetblechausnehmungen 34 in Eingriff gebracht werden, so dass die Vorspannkraft erzeugt werden kann. Nachdem dann die Magnethalteblechvorsprungeinheiten 32 in die Rotorblechkörper 12 bei der Montage eingeführt sind, werden die Magnethaltebleche 30 im Bereich der geradlinigen Kontur 46, die sich in unmittelbarer Nähe der Rotorblechkörpernut 28 befinden, an den Rotorblechkörper 12 angeschlossen. Dies geschieht in dem dargestellten Ausführungsbeispiel durch eine Schweißverbindung 36, die im dargestellten Ausführungsbeispiel als einzelne Schweißpunkte dargestellt ist. Ein weiterer positiver Effekt der Magnethalteblechausnehmungen 34 besteht darin, dass die resultierende Fläche des Magnethalteblechs 30 im Aussparungsbereich auf die relativ dünnen Magnethalteblechstege 40 reduziert wird. Somit werden die Magnethalteblechstege 40 bereits bei geringen magnetischen Feldstärken gesättigt und reduzieren somit die Verlustgröße des magnetischen Kurzschlusses durch das Eisen auf die Gegenpolseite der Magnetpole 18.1, 18.2 innerhalb des Rotors 10.

Ein Verfahren zur Fertigung des in den Figuren 1 und 2 dargestellten Permanentmagnetrotors 10 (Rotor 10) läuft wie folgt ab.

Der Rotor 10 wird außenumfangsmäßig von einer Montagehülse umgeben, die im magnetischen Bereich, das heißt im Bereich der Außenkontur der Magnetpole 18.1, 18.2 in Umfangsrichtung U beabstandete Aussparungen aufweist, die senkrecht zur Draufsichtebene verlaufen, wobei die Aussparungen selbst eine Breite jeweils aufweisen, die der Breite der Magnetsegmente 20 entsprechen. Die Aussparungen sind in Umfangsrichtung U in einem Abstand angeordnet, der der Breite der Magnetsegmente 20 entspricht. Die in die Aussparungen der Montagehülse eingeführten Magnetsegmente 20 werden mittels Klebung an der Außenoberfläche des Rotors 10 befestigt. Danach wird die Montagehülse entfernt und das magnetisch leitfähige Magnethalteblech 30 an der Außenseite des Rotorblechkörpers 12 durch Walzen beziehungsweise Biegen aufgebracht, unter Vorspannung gesetzt und bei Erreichen des vorgespannten Endzustands an dem Rotorblechkörper 12 im Bereich der geradlinigen Kontur 46 mit dem Rotorblechkörper 12 verbunden. Die Verbindung kann als Schweißverbindung, beispielsweise Schweißpunkte, Klammerverbindung, Klebeverbindung, Nietverbindung oder Schraubverbindung ausgebildet sein.

Nachdem das jeweilige Magnethalteblech 30 an dem Magnetblechkörper 12 unter Vorspannung befestigt ist, werden in die Zwischenräume der bereits aufgeklebten Magnetsegmente 20 die restlichen Magnetsegmente 20 eingeführt und verklebt, so dass sich ein durch die Magnetsegmente 20 durchgehende Magnetpol 18.1 beziehungsweise 18.2 ausbildet.

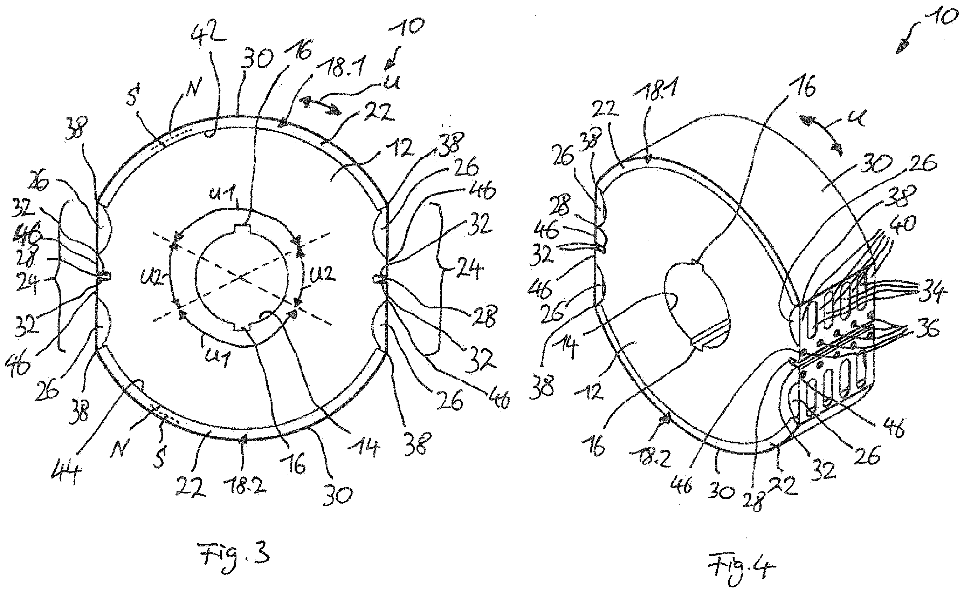

In den Figuren 3 und 4 ist ein zweites Ausführungsbeispiel eines Permanentmagnetrotors 10 (Rotor 10) dargestellt, der sich von dem Permanentmagnetrotor 10 gemäß den Figuren 1 und 2 lediglich dadurch unterscheidet, dass der erste und zweite Magnetpol 18.1, 18.2 nicht aus einzelnen in Umfangsrichtung U nebeneinander angeordnete Magnetsegmenten 20 besteht, sondern aus einem über die gesamte erste und zweite teilkreisförmige Außenkontur 42, 44 ausgebildeter Bogenmagnet 22 vorhanden ist. Ansonsten stimmt die Geometrie und Anordnung der Bauteile des Rotors 10 gemäß den Figuren 3 und 4 mit der Geometrie und der Anordnung der Bauteile des Rotors 10 gemäß den Figuren 1 und 2 überein. Gleiche Bauteile tragen dasselbe Bezugszeichen und werden nicht nochmals erläutert.

Im Unterschied zu dem Rotor 10 gemäß den Figuren 1 und 2 ist bei der verfahrensmäßigen Herstellung des Rotors 10 gemäß den Figuren 3 und 4 keine sukzessive Anbringung der Magnetsegmente 20 erforderlich. Der Bogenmagnet 22 wird in einem Stück auf der ersten beziehungsweise zweiten teilkreisförmigen Außenkontur 42 beziehungsweise 44 des Rotorblechkörpers 12 zunächst aufgeklebt und anschließend das magnetisch leitfähige Halteblech 30 unter Vorspannung wie oben beschrieben fixiert und gesichert.

Beim verfahrensmäßigen Herstellen des Rotors 10 ist es somit grundsätzlich so, dass das Magnethalteblech 30 in Walzrichtung beziehungsweise in Umfangsrichtung um den Rotor 10 geformt wird und seitlich im magnetfreien Bereich 24 am Rotor 10, insbesondere unter Vorspannung, angeschlossen wird (zum Beispiel geschweißt, geklebt, geklammert, genietet oder geschraubt).

Mit dem erfindungsgemäßen Permanentmagnetrotor 10 ist es erfindungsgemäß möglich, kurzschlussfeste Generatoren zur Verfügung zu stellen, bei der keine Entmagnetisierung der Magnetpole erfolgt, da das Magnethalteblech im Kurzschlussfall gesättigt wird und dadurch die Magnetpole des Permanentmagnetrotors vor zu hohen Magnetfeldern des Stators abschirmt. Durch die Verwendung eines Elektroblechs mit hohen Siliziumanteil als Magnethalteblech werden die Wirbelströme im Magnethalteblech gering gehalten, wodurch sich die Magnetpole weniger stark erwärmen.

Des Weiteren können durch den erfindungsgemäßen Permanentmagnetrotor 10 Generatoren erstellt werden, die eine spannungsharte Charakteristik aufweisen, da geringe Verluste durch den möglichen sehr kleinen Luftspalt zwischen dem Rotor und dem Stator erzielt werden können und auf das Vorsehen eines Umrichters verzichtet werden kann. Die Drehzahlfestigkeit wird durch das erfindungsgemäße Magnethalteblech deutlich verbessert, da die Magnetpole durch das Magnethalteblech besser vor Fliehkräften geschützt werden als bei einer bekannten Glasfaser- oder Kohlefaserbandage.

Ein weiterer Vorteil der durch den erfindungsgemäßen Permanentmagnetrotor 10 erzielt wird, liegt im Bereich der Montage des Rotors in den Stator. Durch die glatte Oberfläche, bedingt durch das außenumfangsmäßig angeordnete magnetisch leitfähige Magnethalteblech kann trotz der hohen magnetischen Kräfte bei der Montage des Rotors in den Stator eine Beschädigung der Außenoberfläche des Rotors vermieden werden, was häufig bei Rotoren mit einer Glasfaser- oder Kohlefaserbandage der Fall ist, da die Bandagierung aufgrund der magnetischen Kräfte durch die Statorbleche beschädigt beziehungsweise angeschnitten werden kann.

## Patentansprüche

1. Permanentmagnetrotor (10) mit
- einem zentralen, kreiszylindrischen Rotorblechkörper (12)
- zumindest zwei auf der Außenoberfläche des Rotorblechkörpers (12) zumindest bereichsweise oberflächig angeordneten Magnetpole (18.1, 18.2) mit umgekehrter magnetischer Polung und
- einer die Magnetpole (18.1, 18.2) außenseitig umgebenden Umhüllung, wobei
- die Umhüllung als magnetisch leitfähiges Magnethalteblech (30) ausgebildet ist,
- in zumindest einem magnetfreien Umfangsbereich (24) des Rotorblechkörpers das Magnethalteblech (30) mit dem Rotorblechkörper (12) verbunden ist,
- **dadurch gekennzeichnet, dass**
- das Magnethalteblech (30) im magnetfreien Umfangsbereich (U2) des Rotorblechkörpers (12) mehrere, in Querrichtung beabstandete, insbesondere parallel beabstandete, in Umfangsrichtung verlaufende Magnethalteblechausnehmungen (34) mit Magnethalteblechstegen (40) aufweist,
- der Rotorblechkörper (12) im Umfangsbereich (U2) der Magnethalteblechausnehmungen (34) und Magnethalteblechstegen (40) eine nach außen offene Rotorblechkörperaussparung (26) aufweist.

2. Permanentmagnetrotor nach Anspruch 1,
- **dadurch gekennzeichnet, dass**
- das Magnethalteblech umlaufend über alle Magnetpole vorhanden ist oder separate Magnethaltebleche (30) über jedem Magnetpol (18.1, 18.2) vorhanden sind.

3. Permanentmagnetrotor nach Anspruch 1 oder 2,
- **dadurch gekennzeichnet, dass**
- das Magnethalteblech (30) als Elektroblech/-legierung mit hohem Siliziumanteil ausgebildet ist.

4. Permanentmagnetrotor nach einem oder mehreren der Ansprüche 1 bis 3,
- **dadurch gekennzeichnet, dass**
- das Magnethalteblech (30) im montierten, am Rotorblechkörper (12) befestigten Zustand unter Vorspannung steht.

5. Permanentmagnetrotor nach einem oder mehreren der vorstehenden Ansprüche,
- **dadurch gekennzeichnet, dass**
- die Dicke des Magnethalteblechs (30) im Bereich zwischen 0,2 bis 1,5 mm (Millimeter), insbesondere bei circa 0,35 mm (Millimeter), liegt.

6. Permanentmagnetrotor nach einem oder mehreren der vorstehenden Ansprüche,
- **dadurch gekennzeichnet, dass**
- der Rotorblechkörper (12) im magnetfreien Bereich (24) eine Abflachung aufweist.

7. Permanentmagnetrotor nach einem oder mehreren der vorstehenden Ansprüche,
- **dadurch gekennzeichnet, dass**
- mehrere in Umfangsrichtung (U) des Rotorblechkörpers (12) versetzt angeordnete magnetfreie Bereiche (24) vorhanden sind, wobei in Umfangsrichtung (U) zwischen den magnetfreien Bereichen (24) jeweils magnetisch getrennte Magnetpole (18.1, 18.2) mit umgekehrter magnetischer Polung vorhanden sind und die Magnetpole (18.1, 18.2) von einem umlaufenden oder von jeweils einem separaten Magnethalteblech (30) umhüllt sind/ ist.

8. Permanentmagnetrotor nach Anspruch 7,
- **dadurch gekennzeichnet, dass**
- die Magnetpole/magnetfreien Bereiche in Umfangsrichtung (U) in einem Winkel von 180°, 90°, 60°, 45°, 36°, 30°, 25,7°, 22,5°, 20° oder 18° (Altgrad) angeordnet sind.

9. Permanentmagnetrotor nach einem oder mehreren der vorstehenden Ansprüche,
- **dadurch gekennzeichnet, dass**
- der Magnetpol (18.1, 18.2) als Bogenmagnet oder als aus einzelnen in Umfangsrichtung nebeneinander angeordneten Magnetsegmenten (20) bestehender Magnetpol (18.1, 18.2) ausgebildet ist.

10. Permanentmagnetrotor nach einem oder mehreren der vorstehenden Ansprüche,
- **dadurch gekennzeichnet, dass**
- die Verbindung des/ der Magnethaltebleche (30) mit dem Rotorblechkörper (12) als Schweiß- (36), Klammer-, Klebe-, Niet- oder Schraubverbindung ausgebildet ist.

11. Permanentmagnetgenerator mit
- einer Statorvorrichtung,
- einem Permanentmagnetrotor,
- eine an dem Permanentmagnetrotor gekoppelte Welleneinrichtung,
- **dadurch gekennzeichnet, dass**
- zumindest ein Permanentmagnetrotor (10) nach einem oder mehreren der vorstehenden Ansprüche vorhanden ist.

12. Permanentmagnetgenerator nach Anspruch 11,
- **dadurch gekennzeichnet, dass**
- mehrere in Umfangsrichtung der Welleneinrichtung versetzt und in Längsrichtung der Welleneinrichtung übereinander angeordnete Permanentmagnetrotoren (10) vorhanden sind.

13. Verfahren zur Herstellung eines Permanentmagnetrotors nach einem oder mehreren der Ansprüche 1 bis 12, mit folgenden Verfahrensschritten:
- Befestigen von zumindest zwei Magnetpolen (18.1, 18.2) mit umgekehrter magnetischer Polung zumindest bereichsweise auf der Außenoberfläche des Rotorblechkörpers (12) mit anschließendem außenseitigen Umhüllen der Magnetpole (18.1, 18.2) mit einer Umhüllung, wobei
- als Umhüllung ein magnetisch leitfähiges Magnethalteblech (30) eingesetzt wird,
- das Magnethalteblech (30) in Umfangsrichtung außenseitig um den Permanentmagnetrotor (10) und die Magnetpole (18.1, 18.2) umgeformt/ aufgewalzt wird und
- anschließend jeweils in den magnetfreien Bereichen (24) des Permanentmagnetrotors (10) befestigt wird,
- **dadurch gekennzeichnet, dass**
- das Magnethalteblech (30) eingesetzt wird, das im magnetfreien Umfangsbereich (U2) des Rotorblechkörpers (12) mehrere, in Querrichtung beabstandete, insbesondere parallel beabstandete, in Umfangsrichtung verlaufende Magnethalteblechausnehmungen (34) mit Magnethalteblechstegen (40) aufweist, und
- ein Rotorblechkörper (12) eingesetzt wird, der im Umfangsbereich (U2) der Magnethalteblechausnehmungen (34) und Magnethalteblechstegen (40) eine nach außen offene Rotorblechkörperaussparung (26) aufweist.

14. Verfahren nach Anspruch 13,
- **dadurch gekennzeichnet, dass**
- das Magnethalteblech (30) vor der Befestigung an dem Rotorblechkörper (12) unter Vorspannung gesetzt wird und dann am Rotorblechkörper (12) befestigt wird.

15. Verfahren nach Anspruch 13 oder 14,
- **dadurch gekennzeichnet, dass**
- die Befestigung des Magnethalteblechs (30) an dem Rotorblechkörper (12) durch Schweißung, Klebung, Klammerung, Nietung oder Schraubung erfolgt.

## Claims

1. Permanent magnet rotor (10) having
- a central, circular-cylindrical rotor lamination body (12);
- at least two magnetic poles (18.1, 18.2) of reversed polarity, which at least in regions of the surface are disposed on the external surface of the rotor lamination body (12); and
- a casing which externally surrounds the magnetic poles (18.1, 18.2), wherein
- the casing is configured as a magnetically conductive magnet holding plate (30);
- the magnet holding plate (300) being connected to the rotor lamination body (12) in at least one magnet-free circumferential region (24) of the rotor lamination body,
**characterized in that**
- the magnet holding plate (30) in the magnet-free circumferential region (U2) of the rotor lamination body (12) has a plurality of magnet holding plate recesses (34), having magnet holding plate webs (40), which are spaced apart, in particular in parallel, in the transverse direction and run in the circumferential direction;
- the rotor lamination body (12) in the circumferential region (U2) of the magnet holding plate recesses (34) and magnet holding plate webs (40) has a rotor lamination body clearance (26) that is open towards the outside.

2. Permanent magnet rotor according to Claim 1, **characterized in that**
- the magnet holding plate is present so as to encircle all magnetic poles, or separate magnet holding plates (30) are present above each magnetic pole (18.1, 18.2).

3. Permanent magnet rotor according to Claim 1 or 2, **characterized in that**
- the magnet holding plate (30) is configured as an electrical sheet/alloy having a high proportion of silicon.

4. Permanent magnet rotor according to one or a plurality of Claims 1 to 3, **characterized in that**
- the magnet holding plate (30) in the assembled state fastened to the rotor lamination body (12) is pre-tensioned.

5. Permanent magnet rotor according to one or a plurality of the preceding claims, **characterized in that**
- the thickness of the magnet holding plate (30) is in the range between 0.2 to 1.5 mm (millimetres), in particular is approximately 0.35 mm (millimetre).

6. Permanent magnet rotor according to one or a plurality of the preceding claims, **characterized in that**
- the rotor lamination body (12) in the magnet-free region (24) has a bevel.

7. Permanent magnet rotor according to one or a plurality of the preceding claims, **characterized in that**
- a plurality of magnet-free regions (24) which are disposed so as to be offset in the circumferential direction (U) of the rotor lamination body (12) are present, wherein magnetically isolated magnetic poles (18.1, 18.2) of reversed polarity are in each case present in the circumferential direction (U) between the magnet-free regions (24), and the magnetic poles (18.1, 18.2) are encased by an encircling magnet holding plate (30) or in each case encased by a separate magnet holding plate (30).

8. Permanent magnet rotor according to Claim 7, **characterized in that**
- the magnetic poles/magnet-free regions in the circumferential direction (U) are disposed at an angle of 180°, 90°, 60°, 45°, 36°, 30°, 25.7°, 22.5°, 20° or 18° (degrees).

9. Permanent magnet rotor according to one or a plurality of the preceding claims, **characterized in that**
- the magnetic pole (18.1, 18.2) is configured as an arcuate magnet or as a magnetic pole (18.1, 18.2) which is composed of individual magnet segments (20) disposed next to one another in the circumferential direction.

10. Permanent magnet rotor according to one or a plurality of the preceding claims, **characterized in that**
- the connection between the magnet holding plate/plates (30) and the rotor lamination body (12) is configured as a welded connection (36), clip connection, adhesively bonded connection, rivet connection or screw connection.

11. Permanent magnet generator having
- a stator device;
- a permanent magnet rotor;
- a shaft installation coupled to the permanent magnet rotor;
**characterized in that**
- at least one permanent magnet rotor (10) according to one of a plurality of the preceding claims is present.

12. Permanent magnet generator according to Claim 11, **characterized in that**
- a plurality of permanent magnet rotors (10) which are offset in the circumferential direction of the shaft installation and disposed on top of one another in the longitudinal direction of the shaft installation are present.

13. Method for producing a permanent magnet rotor according to one of Claims 1 to 12, comprising the following method steps:
- fastening at least two magnetic poles (18.1, 18.2) of reversed polarity at least in regions on the external surface of the rotor lamination body (12), and subsequently externally encasing the magnetic poles (18.1, 18.2) with a casing, wherein
- a magnetically conductive magnet holding plate (30) is used as the casing;
- the magnet holding plate (30) is formed/rolled externally in the circumferential direction about the permanent magnet rotor (10) and the magnetic poles (18.1, 18.2); and
- subsequently is in each case fastened in the magnet-free regions (24) of the permanent magnet rotor (10),
**characterized in that**
- the magnet holding plate (30), which in the magnet-free circumferential region (U2) of the rotor lamination body (12) has a plurality of magnet holding plate recesses (34), having magnet holding plate webs (40), which are spaced apart, in particular in parallel, in the transverse direction and run in the circumferential direction, is inserted; and
- a rotor lamination body (12) which in the circumferential region (U2) of the magnet holding plate recesses (34) and magnet holding plate webs (40) has a rotor lamination body recess (26) that is open towards the outside is inserted.

14. Method according to Claim 13, **characterized in that**
- the magnet holding plate (30), prior to fastening to the rotor lamination body (12), is pre-tensioned and then fastened to the rotor lamination body (12).

15. Method according to Claim 13 or 14, **characterized in that**
- the fastening of the magnet holding plate (30) to the rotor lamination body (12) is performed by welding, adhesive bonding, clip-fitting, riveting, or screw-fitting.

## Revendications

1. Rotor à aimants permanents (10), comprenant
- un corps de tôles rotoriques (12) cylindrique circulaire central,
- au moins deux pôles magnétiques (18.1, 18.2) disposés sur la surface extérieure du corps de tôles rotoriques (12) au moins par endroits de manière superficielle et ayant une polarisation magnétique inverse, et
- une enveloppe entourant les pôles magnétiques (18.1, 18.2) sur la face extérieure, dans lequel
- l'enveloppe est réalisée comme une tôle de support d'aimant (30) magnétiquement conductrice,
- dans au moins une zone circonférentielle (24) sans aimant du corps de tôles rotoriques, la tôle de support d'aimant (30) est reliée au corps de tôles rotoriques (12),
- **caractérisé en ce que**
- la tôle de support d'aimant (30) présente dans la zone circonférentielle sans aimant (U2) du corps de tôles rotoriques (12) plusieurs creux de tôle de support d'aimant (34) espacés dans la direction transversale, en particulier espacés en parallèle, s'étendant dans la direction circonférentielle, avec des entretoises de support d'aimant (40),
- le corps de tôles rotoriques (12) présente dans la zone circonférentielle (U2) des creux de tôle de support d'aimant (34) et des entretoises de tôle de support d'aimant (40) un évidement de corps de tôles rotoriques (26) ouvert vers l'extérieur.

2. Rotor à aimants permanents selon la revendication 1,
- **caractérisé en ce que**
- la tôle de support d'aimant est présente en périphérie sur tous les pôles magnétiques, ou des tôles de support d'aimant (30) séparées sont présentes sur chaque pôle magnétique (18.1, 18.2).

3. Rotor à aimants permanents selon la revendication 1 ou 2,
- **caractérisé en ce que**
- la tôle de support d'aimant (30) est réalisée sous forme de tôle/alliage électrique à forte teneur en silicium.

4. Rotor à aimants permanents selon une ou plusieurs des revendications 1 à 3,
- **caractérisé en ce que**
- la tôle de support d'aimant (30) est sous précontrainte à l'état monté, fixé au corps de tôles rotoriques (12).

5. Rotor à aimants permanents selon une ou plusieurs des revendications précédentes,
- **caractérisé en ce que**
- l'épaisseur de la tôle de support magnétique (30) est comprise dans la plage entre 0,2 à 1,5 mm (millimètres), en particulier égale à environ 0,35 mm (millimètres).

6. Rotor à aimants permanents selon une ou plusieurs des revendications précédentes,
- **caractérisé en ce que**
- le corps de tôles rotoriques (12) présente un méplat dans la zone sans aimant (24).

7. Rotor à aimants permanents selon une ou plusieurs des revendications précédentes,
- **caractérisé en ce que**
- plusieurs zones sans aimant (24), disposées de manière décalée dans la direction circonférentielle (U) du corps de tôles rotoriques (12) sans présentes, dans lequel, dans la direction circonférentielle (U), entre les zones sans aimant (24), des pôles magnétiques (18.1, 18.2) respectivement séparés magnétiquement, à polarisation magnétique inverse, sont présents, et les pôles magnétiques (18.1, 18.2) sont enveloppés d'une tôle de support d'aimant (30) périphérique ou sont enveloppés respectivement d'une tôle de support d'aimant séparée.

8. Rotor à aimants permanents selon la revendication 7,
- **caractérisé en ce que**
- les pôles magnétiques/zones sans aimant sont disposés dans la direction circonférentielle (U) selon un angle de 180°, 90°, 60°, 45°, 36°, 30°, 25,7°, 22,5°, 20° ou 18° (degré).

9. Rotor à aimants permanents selon une ou plusieurs des revendications précédentes,
- **caractérisé en ce que**
- le pôle magnétique (18.1, 18.2) est réalisé sous la forme d'un aimant en arc ou d'un pôle magnétique (18.1, 18.2) composé de segments magnétiques (20) individuels, disposés côte à côte dans la direction circonférentielle.

10. Rotor à aimants permanents selon une ou plusieurs des revendications précédentes,
- **caractérisé en ce que**
- l'assemblage de la ou des tôles de support d'aimant (30) avec le corps de tôles rotoriques (12) est réalisé sous forme d'assemblage soudé (36), serré, collé, riveté ou vissé.

11. Générateur à aimants permanents, comprenant
- un dispositif de stator,
- un rotor à aimants permanents,
- un dispositif d'arbre couplé au rotor à aimants permanents,
- **caractérisé en ce que**
- au moins un rotor à aimants permanents (10) selon une ou plusieurs des revendications précédentes est présent.

12. Générateur à aimants permanents selon la revendication 11,
- **caractérisé en ce que**
- plusieurs rotors à aimants permanents (10) disposés de manière décalée dans la direction circonférentielle du dispositif d'arbre et disposés les uns au-dessus des autres dans la direction longitudinale du dispositif d'arbre sont présents.

13. Procédé de fabrication d'un rotor à aimants permanents selon une ou plusieurs des revendications 1 à 12, comprenant les étapes de procédé suivantes consistant à :
- fixer au moins deux pôles magnétiques (18.1, 18.2) à polarisation magnétique inverse au moins par endroits à la surface extérieure du corps de tôles rotoriques (12), et envelopper ensuite sur la face extérieure les pôles magnétiques (18.1, 18.2) à l'aide d'une enveloppe, dans lequel
- une tôle de support d'aimant (30) magnétiquement conductrice est mise en oeuvre comme enveloppe,
- la tôle de support d'aimant (30) est façonnée/laminée dans la direction circonférentielle sur la face extérieure autour du rotor à aimants permanents (10) et des pôles magnétiques (18.1, 18.2), et
- est ensuite fixée respectivement dans les zones sans aimant (24) du rotor à aimants permanents (10),
- **caractérisé en ce que**
- la tôle de support d'aimant (30) est mise en oeuvre qui présente dans la zone circonférentielle sans aimant (U2) du corps de tôles rotoriques (12) plusieurs creux de tôle de support d'aimant (34) munis d'entretoises de support d'aimant (40), espacés dans la direction transversale, en particulier espacés en parallèle, s'étendant dans la direction circonférentielle, et
- un corps de tôles rotoriques (12) est mis en oeuvre qui présente dans la zone circonférentielle (U2) des creux de tôle de support d'aimant (34) et des entretoises de tôle de support d'aimant (40) un évidement de corps de tôles rotoriques (26) ouvert vers l'extérieur.

14. Procédé selon la revendication 13,
- **caractérisé en ce que**
- la tôle de support d'aimant (30) est mise sous précontrainte avant d'être fixée au corps de tôles rotoriques (12) et est ensuite fixée au corps de tôles rotoriques (12).

15. Procédé selon la revendication 13 ou 14,
- **caractérisé en ce que**
- la fixation de la tôle de support d'aimant (30) au corps de tôles rotoriques (12) est effectuée par soudage, collage, serrage, rivetage ou vissage.
